# FASCICULE DE BREVET EUROPEEN

(11) **EP 0 311 538 B1**
(45) Date de publication et mention de la délivrance du brevet: **12.05.1993**
(21) Numéro de dépôt: 88420337.3
(22) Date de dépôt: 05.10.1988
(51) Int. Cl.: C04B 35/54, H05B 3/60, F27B 9/14, F27B 9/38

(54) **Procédé et dispositif de graphitisation continue simultanée de produits carbonés longs et de grains carbonés circulant à contre-courant**
Verfahren und Vorrichtung zur kontinuierlichen und gleichzeitigen Graphitierung von langen Kunstkohlekörpern und von körnigem Kohlenstoffmaterial in Gegenstrombewegung
Process and apparatus for the continuous and simultaneous graphitisation of long carbonaceous bodies and of carbonaceous grains moving counter-currently

(30) Priorité: 06.10.1987 FR 8714151
(43) Date de publication de la demande: 12.04.1989
(73) Titulaire: SERS SOCIETE DES ELECTRODES & REFRACTAIRES SAVOIE, F-92400 Courbevoie (FR)
(72) Inventeur: Charmier, François, F-74190 Chadde-Passy (FR); Bernard, Jean-Claude, F-69110 St Foy-les-Lyon (FR)
(74) Mandataire: Pascaud, Claude

(56) Documents cités:
- WO-A-84/01368
- DE-A- 2 311 467
- GB-A- 2 185 559

## Description

La présente invention concerne un procédé et un dispositif de graphitisation continue simultanée de produits carbonés longs, tels que des électrodes, des barres, des tubes, et de grains carbonés circulant à contre-courant.

De nombreux procédés ont été proposés pour réaliser la graphitisation en continu de matières carbonées sous forme de pièces massives ou sous forme granulaire. Ces procédés n'ont pas toujours donné des résultats satisfaisants à cause de la difficulté qu'il y a à trouver des matériaux réfractaires à travers lesquels des produits carbonés, portés à près de 3000°C puissent se déplacer et aussi à cause des difficultés qu'il y a à chauffer jusqu'à 3000°C ces produits.
Dans le brevet DE-C 2 311 467, on décrit un procédé qui permet de graphitiser en continu des produits carbonés cylindriques qu'on fait circuler verticalement à l'intérieur d'un four.
Dans le brevet EP 121 530, on décrit un procédé de graphitisation continue de produits longs, notamment des électrodes cylindriques, que l'on fait circuler horizontalement dans un four comportant une zone d'entrée, une zone de graphitation, une zone de prérefroidissement et une zone de sortie.

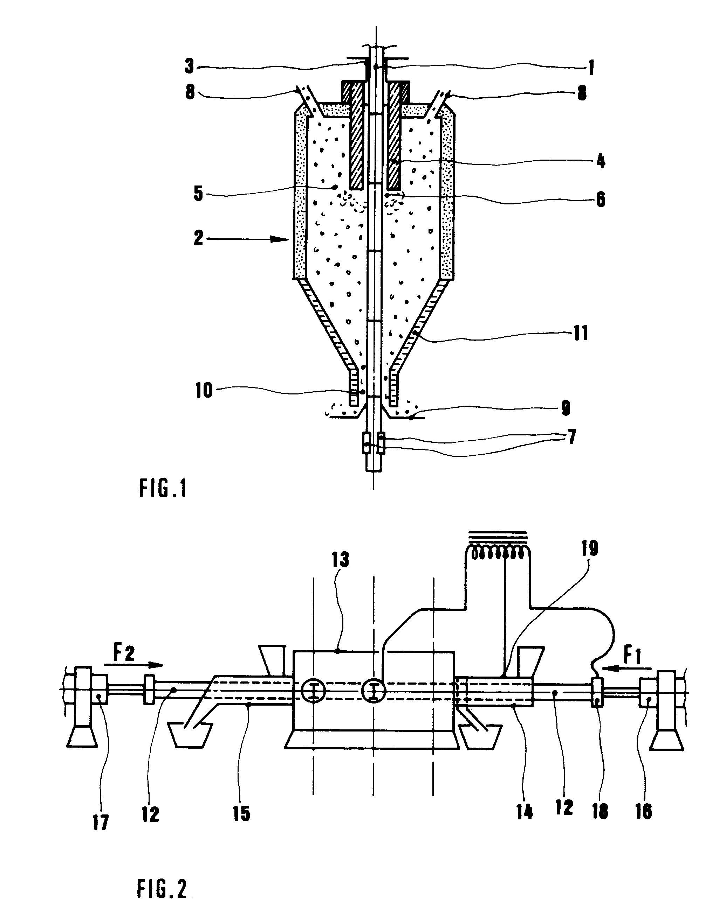

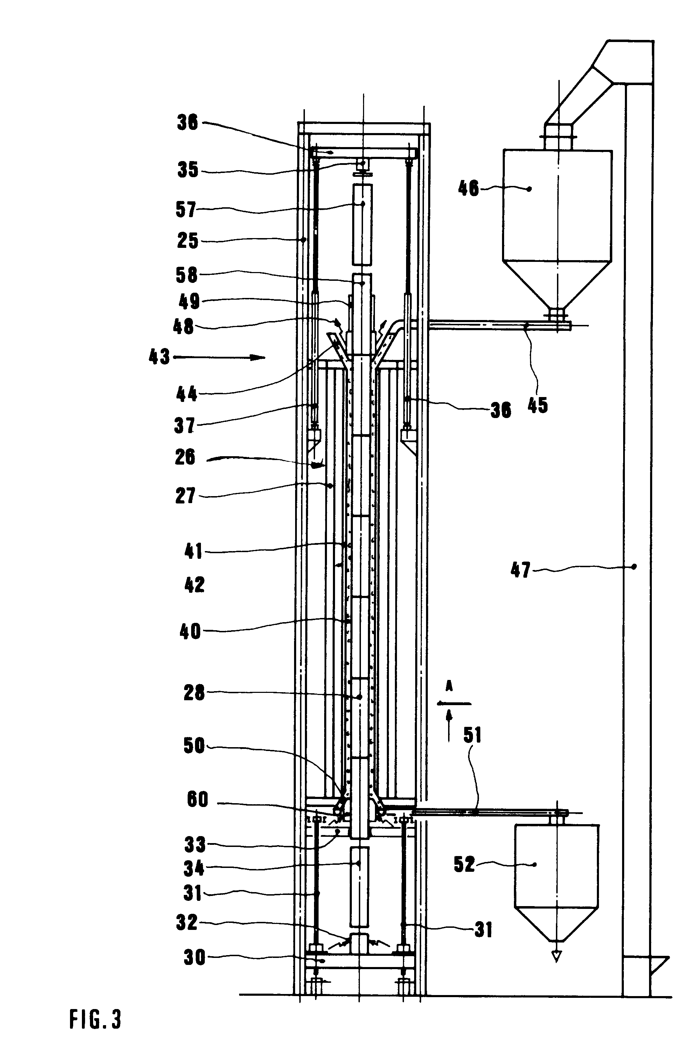

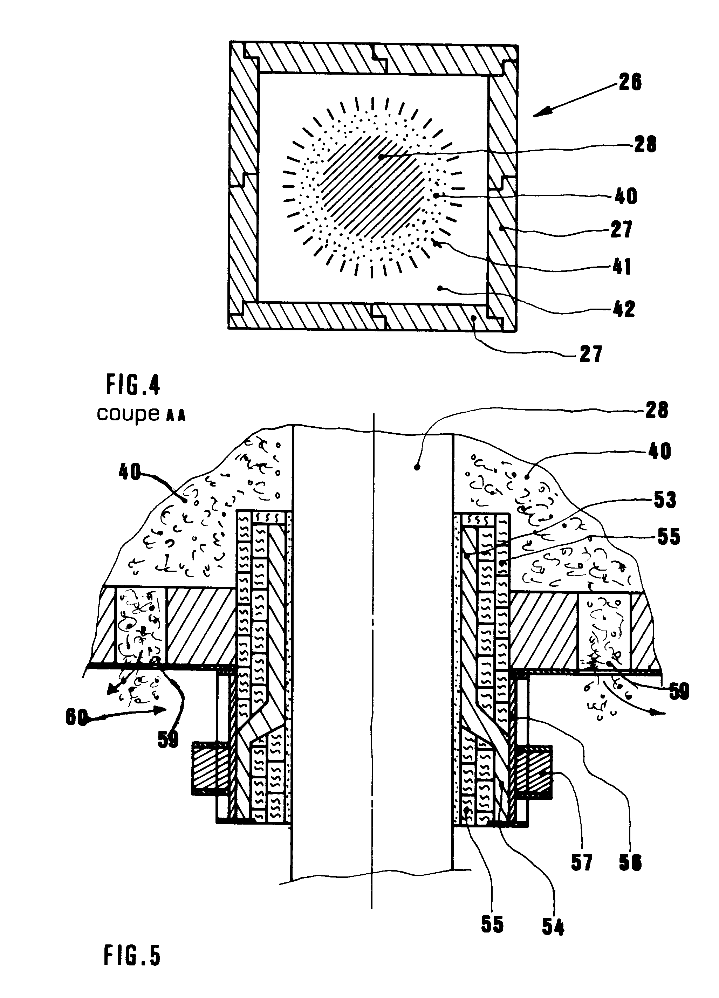

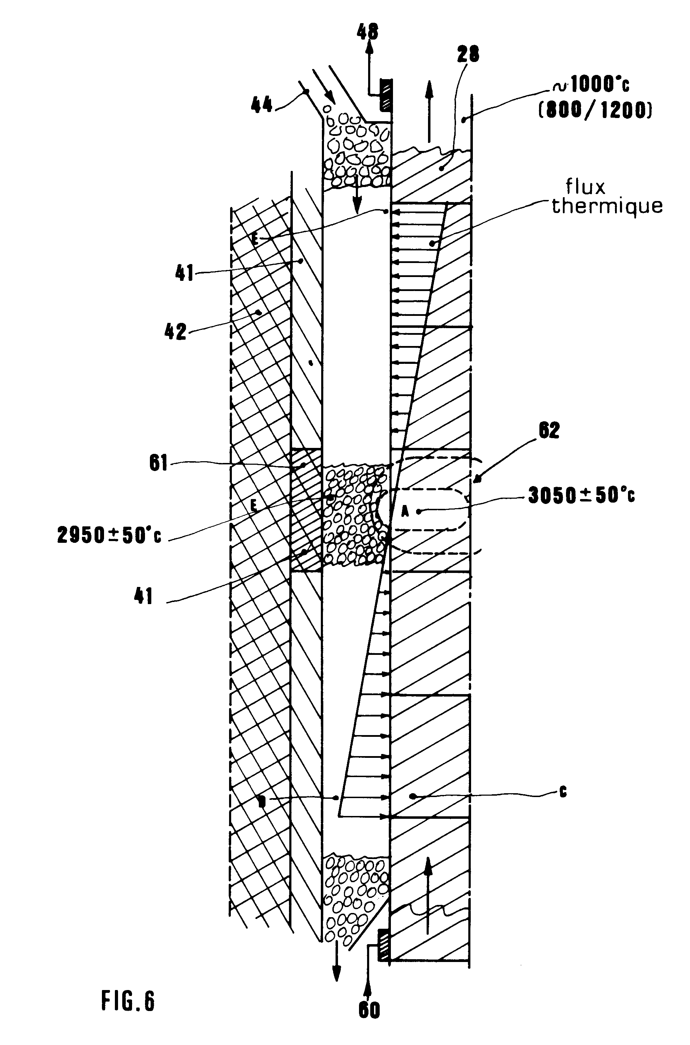

Les figures ci-après permettront de mieux comprendre les caractéristiques de ces deux procédés connus et du procédé et dispositif faisant l'objet de la présente invention.
. Figure 1 : vue en coupe-élévation d'un four continu de graphitisation à axe vertical selon DE-C-2 311 647.
. Figure 2 : vue en coupe-élévation d'un four continu de graphitisation à axe horizontal, selon EP-Bl-121 530.
   Ces deux figures se rapportent à l'art antérieur.
. Figure 3 : vue en coupe-élévation d'un four continu de graphitisation à axe vertical, selon l'invention.
. Figure 4 : coupe selon AA de la figure 3.
. Figure 5 : détail de la connexion de courant sur la colonne de produits carbonés (coupe verticale).
. Figure 6 : diagramme des échanges thermiques dans les différentes zones du four de graphitisation.

Dans le procédé suivant DE-C-2 311 467, comme le montre la figure 1, les produits carbonés à graphitiser 1 qui, dans le cas de la figure, sont des barres de section circulaire disposées verticalement bout à bout, pénètrent dans le four 2 à travers un orifice d'entrée constitué par un tube de guidage 3 et un manchon annulaire en graphite 4, lequel est relié à l'un des pôles d'une source de courant électrique. Ce manchon a un diamètre intérieur tel qu'il existe un jeu radial important entre la colonne de produits carbonés et lui. Le passage du courant électrique entre le manchon et les produits carbonés n'a pas lieu de façon directe, mais par l'intermédiaire des grains de coke 5 qui remplissent l'intérieur du four 2 et sont en contact, d'une part, avec la paroi extérieure du manchon 4 et, d'autre part, avec la colonne de produits carbonés 1, dans une zone qui débute au-dessous de ce manchon, là où le talus d'éboulement du coke, qui laisse un espace libre en forme d'entonnoir 6 au-dessous du manchon, entre en contact avec la colonne de produits carbonés. Il y a donc échauffement progressif de cette colonne à la fois par rayonnement et par conduction thermique des grains de coke, portés à haute température par le courant électrique qui les traverse, et aussi par chauffage direct par le courant électrique qui s'écoule à travers la colonne au-dessous de l'espace libre 6 en forme d'entonnoir.
En même temps que la colonne de produits carbonés descend dans le four, la couche de granulés de coke, qui est au voisinage de cette colonne, l'accompagne. On introduit donc en permanence du granulé de coke à la partie supérieure du four en 8 pour remplacer celui qui est extrait à la partie inférieure, au moyen du râcleur 10 et du plateau de déchargement 9. En aval de ce plateau, des pièces de contact 7 assurent la liaison à l'extérieur du four entre la colonne de produits carbonés et l'autre pôle de la source de courant électrique.
Le contact électrique entre les tronçons cylindriques des produits carbonés, chacune de leurs extrémités, est assuré par une pâte graphitisée qui durcit au cours de la montée en température.

Dans ce four, les produits à graphitiser et les grains de coke circulent donc dans le même sens, du haut vers le bas, tout au long de la colonne de produits carbonés, ce granulé est entraîné vers le bas à la fois par la pesanteur et par le frottement. Il importe donc d'extraire, à la base du four, de façon aussi régulière que possible, des granulés maintenus une température extrêmement haute par le contact avec la colonne d'électrodes malgré la proximité des parois refroidies par eau 11 du four 1. De même, la colonne d'électrodes sort du four à une température extrêmement élevée du fait qu'elle est parcourue par la totalité du courant électrique jusqu'aux pièces de contact 7 et qu'elle est entourée de grains de coke eux-mêmes portés à une température très élevée.

Dans le procédé suivant le brevet EP 121 530 dont la demanderesse est titulaire, on fait défiler les produits carbonés à graphitiser, en colonne, l'intérieur d'un four muni d'un garnissage constitué par une matière carbonée divisée qui remplit l'intérieur dudit four, le chauffage de la colonne 12 de produits carbonés étant assuré par effet Joule direct jusqu'à une température d'au moins 2500°C.
La colonne de produits carbonés 12 est disposée de façon horizontale ou proche de l'horizontale et la matière carbonée divisée est en contact avec ladite colonne de produits carbonés, mais ne l'accompagne pas dans ses déplacements.
La colonne de produits carbonés est soumise, pendant le défilement, à une contrainte de compression comprise entre 0,1 et 1 MPa selon l'axe de défilement.
Le four est formé par une enceinte allongée 14 qui en constitue le corps 13 et qui comporte à l'une de ses extrémités une zone d'entrée 14 des produits à graphitiser et, à l'autre extrémité, une zone de sortie 15, le calorifugeage du four étant constitué par une matière carbonée divisée. Ces zones sont disposées suivant un axe sensiblement horizontal le long duquel se déplacent en colonne les produits à graphitiser qui sont directement chauffés par effet Joule. Il est en outre équipé de vérins 16,17 ou de tout autre moyen permettant de déplacer la colonne à la vitesse de défilement voulue tout en exerçant sur elle la contrainte de compression.
La liaison électrique entre la colonne de produits à graphitiser et la source de courant du côté amont est répartie en deux points 18,19, une fraction de 10 à 50% de l'intensité du courant de chauffage étant introduite en tête 18 de la colonne et la fraction complémentaire un peu plus en aval (19).
La vitesse de défilement de la colonne peut être, par exemple, de l'ordre de 1 mètre par heure pour des électrodes de 600 mm de diamètre.

Dans la demande de brevet GB-A-2185559, on décrit un four de graphitisation continue de produits longs dans lequel la colonne de produits à graphitiser est disposée verticalement et circule du bas vers le haut, la colonne étant entourée par un produit carboné en grains qui circule à contre courant, donc dans le sens descendant, et qui effectue un échange thermique avec la colonne montante de produits carbonés à graphitiser. Le chauffage par effet Joule de la colonne de produits à graphitiser est réalisé uniquement dans la zone centrale du four délimitée par des électrodes d'amenée et de sortie de courant disposées transversalement par rapport à l'axe du four, le contact électrique étant assuré par les granulés carbonés descendant.

### INCONVENIENTS DE L'ART ANTERIEUR

Le four vertical selon DE-C-2311467 présente l'inconvénient d'une double circulation de même sens du coke et des électrodes à graphitiser, donc d'une température excessivement élevée de l'un et l'autre produit à la sortie du four, malgré la présence d'un dispositif de refroidissement. Ce dispositif ne présente donc aucun avantage, du point de vue de la consommation d'énergie, par rapport aux fours statiques classiques. En outre, le grain de coke n'est pas graphitisé de façon homogène du fait que la partie en contact ou au voisinage des parois n'atteint pas la température de graphitisation.

Le four horizontal selon EP-B1-121530 a permis d'améliorer sensiblement la productivité, de sortir des électrodes à une température suffisamment basse pour qu'il n'y ait plus de risque de combustion et en outre, le garnissage calorifuge de la partie chaude, centrale, ne circule pas. Toutefois, la disposition horizontale de la colonne pose quelques problèmes lors du démarrage du four, de la mise en place d'une électrode cuite et du retrait d'une électrode graphitisée; il faut en effet prendre des précautions pour éviter l'affaissement de la colonne dans la partie centrale.

L'inconvénient du dispositif décrit dans GB-A-2185559 est que le courant de chauffage est amené uniquement dans la partie centrale du four, et par un contact effectué au travers du granulé. L'apport d'énergie sur la colonne à graphitiser risque d'être trop brutal, malgré le préchauffage résultant de l'échange thermique avec les grains carbonés partiellement graphitisés descendant, et cela peut entraîner des fissurations dans des produits carbonés de section transversale importante.

### OBJET DE L'INVENTION

Un premier objet de l'invention est un procédé de graphitisation par effet Joule direct de produits carbonés longs disposés verticalement en colonne dans un four, sous une contrainte axiale de l'ordre de 0,1 à 1 MPa, ladite colonne étant entourée de grains carbonés, contenus par une virole périphérique, procédé selon lequel l'on déplace la colonne progressivement vers le haut, tandis que les grains carbonés descendent à contre courant, par gravité le long de la colonne, chacun des produits constituant la colonne traversant une zone d'entrée, une zone de montée progressive en température par échange thermique avec les grains carbonés chauds graphitisés, jusqu'à atteindre la température de graphitisation simultanée avec les grains carbonés, une zone de refroidissement par échange thermique avec les grains carbonés froids, et une zone de sortie; on extrait d'une part à la partie supérieure du four les produits longs graphitisés et d'autre part, à la partie inférieure du four les grains carbonés graphitisés, ce procédé étant caractérisé en ce que la source de courant alternatif ou unidirectionnel assurant le chauffage par effet joule est connectée en au moins un point situé à la partie inférieure de la colonne avant mise en contact avec les grains carbonés graphitisés s'évacuant à la base de la virole périphérique et en un point situé à la partie supérieure de la colonne avant mise en contact avec les grains carbonés dans la virole périphérique.

Un second objet de l'invention est un dispositif de graphitisation continue par effet Joule de produits carbonés longs disposés verticalement dans un four, en colonne, sous une précontrainte axiale, ladite colonne étant entourée de grains carbonés contenus par une virole périphérique comportant :
- une source de courant alternatif ou unidirectionnel assurant le chauffage de la colonne 28 par effet Joule
- une virole réfractaire 41 coaxiale avec la colonne 28, laissant avec celle-ci un espace pour la descente des grains carbonés 40
- un garnissage calorifuge 42, constitué d'un matériau carboné, pulvérulent peu conducteur de la chaleur, disposé entre la virole 41 et une enveloppe réfractaire externe 27
- un moyen 50 d'évacuation des grains carbonés 40 à la partie inférieure de l'espace entre la virole réfractaire 41 et la colonne 2
ce dispositif étant caractérisé en ce qu'il comporte :
- un dispositif élévateur 30,31, situé à la base de la colonne 28, coopérant en synchronisme avec un dispositif 36, 37 de mise sous contrainte de la colonne, situé à la partie supérieure de ladite colonne
- au moins une première connexion avec la source de courant, située à la partie inférieure de la colonne 28, en-dessous de la virole réfractaire 41 et de l'enveloppe réfractaire externe 27
- une seconde connexion 48, assurant le retour du courant vers la source, et qui est située dans la partie supérieure de la colonne 28 au-dessus du dispositif 44 d'alimentation en grains carbonés
- éventuellement une troisième connexion 60, assurant une introduction complémentaire de chauffage, disposée juste en amont de la goulotte 50 d'évacuation des grains carbonés par rapport au sens de circulation de la colonne
- des moyens complémentaires 49 pour refroidir directement les produits longs sortant à l'extrémité du four.

Le problème posé est donc de récupérer l'énergie libérée au refroidissement et de l'utiliser, au moins en partie, pour chauffer le produit à traiter.

Il apparaît que cela est possible en utilisant comme "fluide d'échange" entre le produit carboné graphitisé chaud et le produit froid entrant, du coke en grains qui circule à contresens des produits carbonés à graphitiser.
Cela offre au moins trois avantages :
1- la densité du coke étant environ la moitié de celle de l'électrode, le double échangeur, que constitue le four, pourra fonctionner à un bon rendement avec des vitesses de circulation voisines pour le grain de coke et l'électrode.
2- Le grain de coke est chimiquement stable à très haute température; on peut donc l'utiliser comme fluide échangeur à ces très hautes températures, ce qui n'est pas le cas d'un fluide d'échange habituel.
3- Le grain de coke sera lui aussi porté à la température de graphitisation et le four pourra de ce fait être considéré comme un four à double production : grains et électrodes graphitisés : on sait en effet que les grains de coke graphitisés trouvent un débouché intéressant notamment pour la recarburation contrôlée des aciers obtenus par affinage à l'oxygène.

Le bilan thermique global de l'opération est donc extrêmement favorable, et la consommation d'énergie ramenée la production totale du four (produits carbonés + grains graphitisés) peut descendre jusqu'à 1000 kWh/t.

### DESCRIPTION DES FIGURES

On rappelle que les figures 1 et 2 se rapportent à l'art antérieur et ont déjà été décrites.
Les figures 3 à 6 se rapportent à l'invention.

### A - Structure du four

Le four est constitué par une charpente métallique supportant le corps 26 du four proprement dit. Ce corps 26 est constitué par une enveloppe 27 de section carrée constituée par des blocs réfractaires assemblés. Cette forme carrée n'est qu'un exemple de réalisation pratique. Elle pourrait être également rectangulaire ou cylindrique sans aucune autre modification.

La colonne 28 de produits longs à graphitiser est disposée dans l'axe du corps 26. Elle repose, à sa base, sur un dispositif élévateur constitué par une plateforme 30 supportée par des vérins à vis synchronisés 31. Sur la figure 3, la plateforme 30 est représentée en position basse, au moment de la mise en place d'un nouvel élément 34 à graphitiser. Pendant cette opération, la base de la colonne engagée dans le four est provisoirement soutenue par un moyen de serrage 33. La plateforme 30 comporte également une amenée de courant 32, à la base de la colonne, qui sera décrite un peu plus loin.
Le sommet du four comporte un dispositif qui assure la mise en compression de la colonne 28 et, en coopération avec l'élévateur 30, 31 le mouvement de montée progressive (continu ou par pas successifs) de la colonne. Ce dispositif 35, analogue l'élévateur (30, 31) mais en position inversée, comporte une plateforme 36 munie d'un appui 35, supportée par des vérins synchronisés 37. A mesure que la colonne 28 monte, poussée par l'élévateur (30, 31), les vérins 37 assurent le relevage de la plateforme 36 tout en maintenant sur la colonne 28 une contrainte comprise entre 0,1 et 1 MPa à la fois pour assurer sa cohésion mécanique et améliorer les contacts électriques entre les différents éléments carbonés qui la constituent. La vitesse de montée de la colonne est, par exemple, de l'ordre de 1 m/heurepour des électrodes de 600 mm de diamètre et, pour un apport d'énergie électrique qui sera précisé dans l'exemple.
La colonne 28 est entourée sur la plus grande partie de sa hauteur (sauf au voisinage des extrémités), par le grain de coke 40 échangeur de chaleur contenu par une virole cylindrique 41, coaxiale avec la colonne 28. Cette virole cylindrique est constituée en un matériau réfractaire ne réagissant pas avec les grains carbonés aux températures considérées. Elle peut être constituée par exemple par un empilement de rondelles de béton réfractaire et/ou de graphite.
Enfin, l'espace 42 entre la virole 41 et les blocs réfractaires 27 est rempli d'un produit calorifuge par exemple du grain de graphite ou du noir de carbone compacté. Ce calorifugeage est purement statique et n'est pas entraîné par la colonne 28 comme dans certains procédés de l'art antérieur.
La partie supérieure de la colonne, au niveau indiqué 43, comporte :
- un moyen d'alimentation 44 en grains de coke à graphitiser, représenté ici schématiquement sous forme d'un entonnoir répartiteur relié par la canalisation 45 à une trémie de stockage 46 que l'on peut réalimenter par l'élévateur 47,
- la prise de courant supérieure 48 qui assure le retour de courant vers la source et qui est constituée par un contact glissant sur lequel nous reviendrons ;
- une gaine de refroidissement complémentaire 49, à circulation d'eau, qui refroidit l'électrode graphitisée sortante jusqu'à une température inférieure à 400°C qui permet sa manutention et élimine tout risque de combustion.

A la partie inférieure, les grains de coke graphitisés s'écoulent par un dispositif tel que l'entonnoir inversé 50 et sont conduits par la canalisation 51 jusqu'à la trémie de stockage 52. Les grains de coke sortent à une température au plus égale à 600°C, à laquelle les risques de combustion sont pratiquement supprimés.
Les prises de courant inférieure et supérieure peuvent être réalisées sous forme de contact glissant, comme cela apparaît sur la figure 5 qui représente en coupe la connexion inférieure.

### B) Prises de courant

Elles constituent l'objet principal de l'invention.
La source de courant, non représentée, est de type connu : transformateur à tension de sortie réglable, éventuellement connecté, à son secondaire, sur un ensemble de redresseurs dans le cas où l'on opère le chauffage en courant unidirectionnel. Le courant de chauffage, alternatif ou unidirectionnel, peut être introduit à la base de la colonne en un ou deux points, et il retourne à la source, comme on l'a déjà indiqué, par la connexion 48 située à la partie supérieure de la colonne.
L'introduction du courant peut donc être effectuée en totalité à la base de la colonne 28, par exemple par appui sur le plot de contact 32, lui-même relié, par exemple par serrage au moyen d'un collier en métal, bon conducteur (cuivre, aluminium), refroidi, à un conducteur souple ou rigide connecté à un pôle de la source de courant.
L'introduction du courant peut aussi être effectuée en totalité par la connexion 60 juste avant l'entrée de la colonne 28 dans le four proprement dit, en amont du dispositif 50 de récupération des grains carbonés (par rapport au sens de circulation de la colonne 28). Dans ce cas, le produit carboné long 28 est en contact avec une pièce de révolution 53, comportant une partie évasée 54. La pièce de contact 53 est protégée par un garnissage réfractaire 55.
Sur la partie évasée 54, est disposé un collier de serrage 56 sur lequel est fixée l'arrivée de courant 57. L'espace réduit entre la colonne 28 et l'alésage de la pièce 53 se remplit spontanément des fractions les plus fines des grains de coke graphitisés, ce qui assure un bon contact électrique entre les deux éléments.
La connexion supérieure 48 peut être réalisée de façon identique, mais en position renversée, la sortie 59 des grains de coke graphitisés devenant l'entrée des grains de coke frais.
Enfin, l'introduction du courant peut être effectuée à la fois à la base de la colonne 28, par la connexion 32, et à l'entrée du four, par la connexion 60 par laquelle on envoie un complément de courant pouvant aller, par exemple, de 0 à 50 % de l'intensité totale traversant la colonne et ressortant par la connexion supérieure 48. Cette façon de procéder permet de préchauffer les produits carbonés 34 sous une puissance réduite avant leur pénétration dans la zone de chauffage à pleine puissance.

### C) Régime électrique et thermique du four

En régime de fonctionnement stabilisé, la colonne de produits carbonés longs est parcourue par un courant, alternatif ou continu, de l'ordre de quelques milliers à quelques dizaines de milliers d'ampères sous une à quelques dizaines de volts. La colonne est soumise à une contrainte de compression de l'ordre de 0,1 à 1 MPa et sa vitesse de montée est de l'ordre du mètre par heure. Ces différentes valeurs numériques sont données pour fixer les idées et ne constituent pas des limites de l'invention.
Les grains de coke 40 descendent à une vitesse du même ordre de grandeur que la vitesse de montée de la colonne 28.

Le calcul et l'expérience montrent que le débit massique moyen des grains carbonés descendants doit se situer entre 0,5 et 1,5 fois le débit massique des produits carbonés longs montants et, de préférence, entre 0,8 et 1,2 fois ce débit.
Ces valeurs permettent d'optimiser les échanges thermiques entre les grains carbonés et les produits carbonés longs de façon que chacun de ces composants sorte du four à une température minimale, qui est généralement de l'ordre de 400° pour les produits carbonés longs graphitisés, après passage dans la zone de refroidissement par fluide, et de l'ordre de 600°C pour les grains carbonés graphitisés.
Le profil thermique du four le long de l'axe vertical se présente de la façon suivante (fig.6):
dans la zone centrale A, la température de la colonne atteint environ 3000°C. Les grains de graphite, au contact de la colonne, peuvent être considérés comme en équilibre thermique, et le flux de chaleur grains-colonne est faible ou nul les grains achèvent de se graphitiser. Au même niveau, les grains en contact avec la virole 41 sont à une température sensiblement inférieure, que l'on peut estimer à 2900°C.
A l'entrée du four (partie inférieure), la température de la colonne est faible, par exemple égale à l'ambiante pour le produit entrant qui vient d'être mis en place. Les grains de graphite sortent à une température comprise entre 500°C dans la partie centrale (au contact de la colonne 28) et 1200°C dans la partie périphérique (au contact de la virole 41); il y a donc un flux thermique important dans le sens : grains de graphite --→ colonne, flux qui diminue progressivement du fait que la colonne s'échauffe à la fois sous l'effet du courant qui la traverse et du flux thermique provenant des grains de coke. La décroissance des flux a été représentée par simplicité comme linéaire, elle est en réalité, d'une forme plus complexe.
Dans la partie supérieure du four, le flux thermique s'inverse et c'est la colonne qui transfère ses calories au grain de coke qui entre en 44 à une température voisine de l'ambiante, alors que la colonne sort, avant le dispositif de refroidissement, et au niveau de la connexion 57, à une température de l'ordre de 600°C.

### D) Conduite du four

Lorsque le produit carboné long 57 situé en haut de la colonne a dépassé, dans son mouvement montant, la zone de refroidissement 49, on coupe le courant et on serre le dispositif 33 de support provisoire de la colonne. Puis :
- on remonte la plateforme supérieure 36 de quelques centimètres de façon à permettre l'enlèvement du produit 57 qui est évacué vers une aire de stockage et on redescend la plateforme 36 jusqu'à ce que le plot 35 arrive au contact avec le produit long 58 qui était auparavant en deuxième position dans la colonne
- on descend la plateforme inférieure 30 jusqu'en butée inférieure et on met en place un produit à graphitiser 34. On remonte la plateforme 30 jusqu'au contact avec le produit 34, on desserre le dispositif support provisoire 33, on règle à nouveau les vérins supérieurs 37 et inférieurs 31 et l'on peut remettre le courant.

Ces opérations sont très rapides. Elles sont faciles à mécaniser et à automatiser par des moyens connus qui sont à la portée de l'homme de l'art.

On notera que, dans la réalisation décrite, la prise de retour de courant se trouve à l'extrémité supérieure de la colonne, et qu'il n'y a pas de prise de retour à l'intérieur du four comme dans le four horizontal décrit dans notre EP 121 530. Bien que cette disposition soit adaptable au four vertical, objet de l'invention, elle ne justifie pas, par des avantages notables, la complication qu'elle entraîne dans la construction du four.

Enfin, compte tenu de la température qui règne dans la zone centrale de graphitisation 62 et qui se situe normalement vers 3050 ± 50°C, on peut estimer que la température des grains de graphite situés en zone périphérique, au contact de la virole 41 est de l'ordre de 2950 ± 50°C. Cela permet d'assurer une graphitisation homogène de l'ensemble des grains de coke mais cela peut aussi poser des problèmes de tenue du matériau réfractaire qui constitue la virole 41, dans la zone 61, fig. 6.

Une première solution consiste à réaliser la partie 61 entièrement en graphite. Une seconde solution consiste à supprimer la partie 61 et à laisser le grain de coke venir au contact du calorifuge carboné 42 situé en arrière de la virole 41. L'expérience montre que l'entraînement de calorifuge par la circulation des grains de coke est négligeable.

### EXEMPLE DE MISE EN OEUVRE

On a construit un four conforme aux principes que l'on vient de décrire, destiné à la graphitisation d'électrodes de carbone, ayant un diamètre pouvant atteindre 600 millimètres. La hauteur totale du four est de l'ordre d'une trentaine de mètres.
Les prises de courant sont conformes à celles représentées sur les figures 3 et 5. 60 % du courant sont introduits à la base de la colonne (connexion 32) et 40 % à l'entrée du four (connexion 60).
On a utilisé, comme grain d'échange, du coke à une granulométrie tout venant 10 mm, sous une épaisseur d'environ 200 mm, et comme calorifuge, du noir de carbone sous une épaisseur de 300 à 400 mm.
La vitesse de circulation de la colonne d'électrodes montante a été fixée à un mètre à l'heure, ce qui correspond à une production horaire de 500 kg/heure. Le débit massique de grains de coke descendant est compris entre 0,8 à 0,9 fois le débit massique d'électrodes. En pratique, ce rapport peut se situer entre 0,5 et 1,5 sans que les performances du four s'en trouvent sensiblement affectées.
Le chauffage est assuré par un courant redressé de 30 kA sous 20 volts, soit 600 kW, ce qui correspond à 1200 kWh/tonne d'électrode graphitée produite, mais à près de la moitié de cette valeur pour le poids total (électrodes + grains graphités) produit par le four. La dérivation de courant dans les grains de coke peut être considérée comme négligeable.

Ce bilan thermique, extrêmement favorable, ainsi que l'homogénéité de la graphitisation et l'absence de fissuration des électrodes graphitisées démontrent tout l'intérêt de l'invention.

## Revendications

1. Procédé de graphitisation continue par effet Joule direct de produits carbonés longs disposés verticalement, dans un four, en colonne, sous une contrainte axiale, ladite colonne étant entourée de grains carbonés contenus par une virole périhérique, procédé dans lequel on déplace la colonne progressivement vers le haut, tandis que les grains carbonés descendent à contre courant, par gravité le long de la colonne, chacun des produits constituant la colonne traversant successivement une zone d'entrée, une zone de montée progressive en température par échange thermique avec les grains carbonés chauds graphitisés, jusqu'à atteindre la température de graphitisation simultanée avec les grains carbonés, une zone de refroidissement par échange thermique avec les grains carbonés froids et une zone de sortie, et on extrait, d'une part, à la partie supérieure du four les produits longs graphitisés et d'autre part, à la partie inférieure du four les grains carbonés graphitisés, ce procédé étant caractérisé en ce que la source de courant assurant le chauffage de la colonne par effet Joule est connectée en au moins un point situé à la partie inférieure de la colonne avant mise en contact avec les grains carbones graphitisés s'évacuant à la base de la virole périphérique et en un point situé à la partie supérieure de la colonne avant mise en contact avec les grains carbonés dans la virole périphérique.

2. Procédé selon revendication 1 caractérisé en ce que le courant de chauffage est du courant alternatif.

3. Procédé selon revendication 1 caractérisé en ce que le courant de chauffage est du courant unidirectionnel.

4. Procédé selon revendication 1 caractérisé en ce que la contrainte axiale exercée sur la colonne est comprise entre 0,1 et 1 MPa.

5. Dispositif de graphitisation continue par effet Joule direct de produits carbonés longs disposés verticalement dans un four, en colonne, sous une contrainte axiale, ladite colonne étant entourée de grains carbonés contenus par une virole périphérique, ce dispositif comportant :
- une source de courant de chauffage alternatif ou unidirectionnel
- une virole réfractaire 41 coaxiale avec la colonne 28, laissant avec celle-ci un espace pour la descente des grains carbonés 40
- un garnissage calorifuge 42, constitué d'un matériau carboné pulvérulent peu conducteur de la chaleur, disposé entre la virole 41 et une enveloppe réfractaire externe 27
- un moyen 44 d'introduction des grains carbonés 40 à la partie supérieure de l'espace entre la virole réfractaire 41 et la colonne 28
- un moyen 50 d'évacuation des grains carbonés 40 à la partie inférieure de l'espace entre la virole réfractaire 41 et la colonne 28,
caractérisé en ce qu'il comporte :
- un dispositif élévateur 30, 31 situé à la base de la colonne 28, coopérant en synchronisme avec un dispositif 36,37 de mise sous contrainte de la colonne, situé à la partie supérieure de ladite colonne
- au moins une première connexion avec la source de courant, située à la partie inférieure de la colonne 28, en-dessous de la virole réfractaire 41 et de l'enveloppe réfractaire externe 27
- une seconde connexion 48 assurant le retour vers la source du courant assurant le chauffage par effet Joule, située à la partie supérieure de la colonne 28, au-dessus du dispositif 44 d'alimentation en grains carbonés
- éventuellement une troisième connexion 60, assurant une introduction complémentaire de chauffage, disposée juste en amont de la goulotte 50 d'évacuation des grains carbonés par rapport au sens de circulation de la colonne
- des moyens complémentaires (49) pour refroidir directement les produits longs sortant à l'extrémité supérieure du four.

6. Dispositif, selon revendication 5, caractérisé en ce qu'il comporte en outre, des moyens auxiliaires 33 pour soutenir la colonne 28 au niveau de son entrée dans le four.

7. Dispositif selon revendication (5) caractérisé en ce que, dans la zone de graphitisation 62, la partie 61 de la virole 41 est constituée en graphite.

8. Dispositif selon revendication (5) caractérisé en ce que, dans la zone de graphitisation 62, la partie 61 de la virole 41 est supprimée.

## Claims

1. A process for the continuous graphitisation by direct Joule effect of long carbonaceous products which are disposed vertically in a furnace in column form under an axial stress, said column being surrounded by carbonaceous grains which are contained by a peripheral shroud, in which process the column is displaced progressively upwardly while the carbonaceous grains move downwardly in counter-flow relationship under the effect of gravity along the column, each of the products making up the column successively passing through an entry zone, a zone involving a progressive rise in temperature by heat exchange with the hot graphitised carbonaceous products, until attaining the temperature for simultaneous graphitisation with the carbonaceous grains, a zone for cooling by heat exchange with the cold carbonaceous grains and an outlet zone, and the graphitised long products are removed on the one hand in the upper part of the furnace and the graphitised carbonaceous grains are removed on the other hand in the lower part of the furnace, the process being characterised in that the current source which provides for heating of the column by the Joule effect is connected at at least one point located in the lower part of the column prior to coning into contact with the graphitised carbonaceous grains which are discharged at the base of the peripheral shroud and at a point located in the upper part of the column prior to coming into contact with the carbonaceous grains in the peripheral shroud.

2. A process according to claim 1 characterised in that the heating current is alternating current.

3. A process according to claim 1 characterised in that the heating current is unidirectional current.

4. A process according to claim 1 characterised in that the axial stress applied to the column is between 0.1 and 1 MPa.

5. Apparatus for the continuous graphitisation by direct Joule effect of long carbonaceous products which are disposed vertically in a furnace in column form under an axial stress, said column being surrounded by carbonaceous grains which are contained by a peripheral shroud, the apparatus comprising:
- a source of alternating or unidirection heating current,
- a refractory shroud 41 which is coaxial with the column 28 and which with sane leaves a space for the downward movement of the carbonaceous grains 40,
- a heat-insulating cladding 42 formed by a carbonaceous powder material which is a poor conductor of heat and disposed between the shroud 41 and an external refractory casing 27,
- a means 44 for the introduction of the carbonaceous grains 40 in the upper part of the space between the refractory shroud 41 and the column 28, and
- a means 50 for discharge of the carbonaceous grains 40 in the lower part of the space between the refractory shroud 41 and the column 28,
characterised in that it comprises:
- a lift device 30, 31 which is disposed at the base of the column 28 and which co-operates synchronously with a device 36, 37 for stressing the column, which is disposed in the upper part of said column,
- at least one first connection to the current source, which is disposed in the lower part of the column 28, below the refractory shroud 41 and the external refractory casing 27,
- a second connection 48 which provides the return to the source of the current which provides the heating action by the Joule effect, which is disposed in the upper part of the column 28 above the device 44 for the feed of carbonaceous grains,
- optionally a third connection 60 which provides for an additional application of heating effect, disposed just upstream of the spout 50 for discharge of the carbonaceous grains with respect to the direction of circulation of the column, and
- complementary means 49 for directly cooling the long products issuing at the upper end of the furnace.

6. Apparatus according to claim 5 characterised in that it further comprises auxiliary means 33 for supporting the column 28 at the location of its entrance into the furnace.

7. Apparatus according to claim 5 characterised in that in the graphitisation zone 62 the part 61 of the shroud 41 is made of graphite.

8. Apparatus according to claim 5 characterised in that in the graphitisation zone 62 the part 61 of the shroud 41 is removed.

## Patentansprüche

1. Verfahren zur kontinuierlichen Graphitierung durch direkten Joule-Effekt, von langen Kunstkohlekörpern, die vertikal in einem Ofen in Form einer Kolonne unter axialem Druck angeordnet sind, wobei die Kolonne von körnigem Kohlenstoffmaterial umgeben ist, das in einem umlaufenden Mantel enthalten ist, bei welchem die Kolonne fortlaufend nach oben verschoben wird, während das körnige Kohlenstoffmaterial sich in Gegenstromrichtung unter Schwerkrafteinwirkung entlang der Kolonne abwärts bewegt, wobei jeder der die Kolonne bildenden Körper nacheinander durchläuft: einen Eingangsbereich, einen Bereich fortlaufenden Temperaturanstiegs durch Wärmeaustausch mit dem heißen körnigen graphitierten Kohlenstoffmaterial bis zum Erreichen der Temperatur der gleichzeitigen Graphitierung mit dem körnigen Kohlenstoffmaterial, einen Abkühlbereich durch Wärmeaustausch mit dem kalten körnigen Kohlenstoffmaterial und einen Ausgangsbereich; und bei welchem einerseits im oberen Bereich des Ofens die langen graphitierten Kunstkohlekörper, andererseits im unteren Bereich des Ofens, das graphitierte körnige Kohlenstoffmaterial entnommen wird, wobei das Verfahren dadurch gekennzeichnet ist, daß die Quelle des Wechsel- oder Gleichstroms, der die Beheizung durch Joule-Effekt bewirkt, zumindest an einem Punkt mit dem unteren Bereich der Kolonne, vor der Herstellung des Kontakts mit dem graphitierten körnigen Kohlenstoffmaterial, das an der Basis des umlaufenden Mantels abfließt, und an einem Punkt im oberen Bereich der Kolonne, vor der Herstellung des Kontakts mit dem körnigen Kohlenstoffmaterial in dem umlaufenden Mantel, verbunden ist.

2. Verfahren nach Anspruch 1, dadurch gekennzeichnet, daß der Heizstrom ein Wechselstrom ist.

3. Verfahren nach Anspruch 1, dadurch gekennzeichnet, daß der Heizstrom ein Gleichstrom ist.

4. Verfahren nach Anspruch 1, dadurch gekennzeichnet, daß der auf die Kolonne ausgeübte axiale Druck zwischen 0,1 und 1 MPa liegt.

5. Vorrichtung zur kontinuierlichen Graphitierung durch direkten Joule-Effekt, von langen Kunstkohlekörpern, die vertikal in einem Ofen in Form einer Kolonne unter axialem Druck angeordnet sind, wobei die Kolonne von körnigem Kohlenstoffmaterial umgeben ist, das in einem umlaufenden Mantel enthalten ist, wobei die Vorrichtung umfaßt:
· eine Wechsel- oder Gleichstromquelle zur Beheizung,
· einen mit der Kolonne 28 koaxialen hitzefesten Mantel 41, der zwischen beiden einen Freiraum für die Abwärtsbewegung des körnigen Kohlenstoffmaterials 40 läßt,
· eine wärmeisolierende Auskleidung 42 aus einem schlecht wärmeleitenden, pulverigen kohlenstoffhaltigen Material, die zwischen dem Mantel 41 und einer äußeren hitzefesten Umkleidung 27 angebracht ist,
· eine Vorrichtung 44 zur Einführung des körnigen Kohlenstoffmaterials 40 am oberen Bereich des Freiraums zwischen dem hitzefesten Mantel 41 und der Kolonne 28,
· eine Vorrichtung 50 zur Entnahme des körnigen Kohlenstoffmaterials 40 im unteren Bereich des Freiraums zwischen dem hitzefesten Mantel 41 und der Kolonne 28,
wobei diese Vorrichtung dadurch gekennzeichnet ist, daß sie umfaßt:
· eine an der Basis der Kolonne 28 angebrachte Hebevorrichtung 30, 31, die synchronisiert mit einer Vorrichtung 36, 37 zusammenwirkt, die am oberen Bereich der Kolonne angebracht ist und die Kolonne unter Druck setzt,
· zumindest eine erste Verbindung mit der Stromquelle, die im unteren Bereich der Kolonne 28 unterhalb des hitzefesten Mantels 41 und der äußeren hitzefesten Umkleidung 27 angebracht ist,
· eine zweite Verbindung 48, die den die Beheizung durch Joule-Effekt bewirkenden Strom zur Quelle zurückführt und die im oberen Bereich der Kolonne 28 oberhalb der Zufuhreinrichtung 44 für das körnige Kohlenstoffmaterial angebracht ist,
· eventuell eine dritte Verbindung 60, die die Zuführung einer ergänzenden Heizung bewirkt, die gerade stromaufwärts im Sinne der Bewegung der Kolonne von dem zur Entnahme des körnigen Kohlenstoffmaterials dienenden Auslauf 50 angebracht ist,
· ergänzende Einrichtungen 49 zur direkten Abkühlung der den Ofen am oberen Ende verlassenden langen Körper.

6. Vorrichtung nach Anspruch 5, dadurch gekennzeichnet, daß sie darüberhinaus Hilfseinrichtungen 33 zur Unterstützung der Kolonne 28 in Höhe ihres Eintritts in den Ofen umfaßt.

7. Vorrichtung nach Anspruch 5, dadurch gekennzeichnet, daß im Graphitierungsabschnitt 62 der Bereich 61 des Mantels 41 aus Graphit besteht.

8. Vorrichtung nach Anspruch 5, dadurch gekennzeichnet, daß im Graphitierungsabschnitt 62 der Bereich 61 des Mantels 41 fortgelassen ist.
